**Europäisches Patentamt**

**European Patent Office**

**Office européen des brevets**

(11) Veröffentlichungsnummer: **0 088 981**

**A2**

(12) **EUROPÄISCHE PATENTANMELDUNG**

(21) Anmeldenummer: **83102225.6**

(22) Anmeldetag: **07.03.83**

(51) Int. Cl.³: **A 61 C 11/00**

(30) Priorität: **11.03.82 DE 3208740**

(43) Veröffentlichungstag der Anmeldung:
**21.09.83 Patentblatt 83/38**

(84) Benannte Vertragsstaaten:
**AT CH DE FR GB LI**

(71) Anmelder: **Bittner, Ewald**
**Zur Hofwiese 4**
**D-3304 Wendeburg(DE)**

(72) Erfinder: **Bittner, Ewald**
**Zur Hofwiese 4**
**D-3304 Wendeburg(DE)**

(74) Vertreter: **Döring, Rudolf, Dr.-Ing.**
**Patentanwälte Dr.-Ing. R. Döring Dipl.-Phys. Dr. J. Fricke**
**Jasperallee 1a**
**D-3300 Braunschweig(DE)**

(54) Apparat zur Nachahmung der Kieferbewegungen in der Form eines Artikulators.

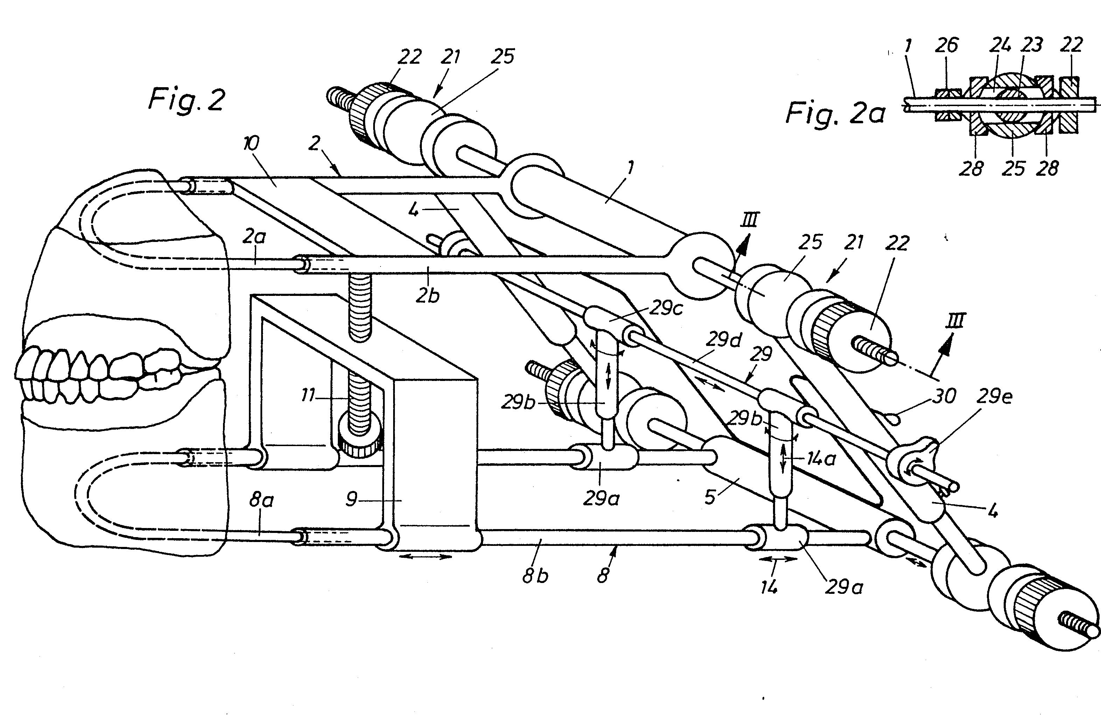

(57) Der Apparat zur Nachahmung der Kieferbewegungen weist zwei Träger in Form von Bügeln (2,8) zur Aufnahme der Kiefermodelle (12,13) auf, von denen der obere um eine obere Querachse (1) schwenkbar und der untere an einer unteren Querachse (5) gegen Verschwenkbewegungen sicher gehalten ist. Die Querachsen sind über längeneinstellbare und in einem einstellbaren Winkel zur Ebene des unteren Bügels geneigt verlaufende Streben (4) so verbunden, daß sie zusammen mit dem oberen Bügel etwa in der Ebene des oberen Bügels über einen Winkelbereich entsprechend den Seitbißstellungen des Oberkiefermodelles verschwenkt werden können. Die Streben sind dabei entweder als elastisch biegsame Streben ausgebildet oder aber biegesteif und über fixierbare Kugelgelenke (21) an den Querachsen gehalten. Mit biegesteifen Streben kann der Apparat auch für die Aufstellung der Zähne des Ober- und Unterkiefers von Vollprothesen und ihre Zusammenfassung im Block mit einer künstlichen gnathologischen Aufbißfläche der Zähne verwendet werden, bei der in jeder Bißstellung alle Zähne des Ober- und Unterkiefers in Berührung bleiben (Fig. 2).

EP 0 088 981 A2

- 1 -

Ewald Bittner
Zur Hofwiese 4
3304 Wendeburg

Apparat zur Nachahmung der Kieferbewegungen in der
Form eines Artikulators.

Die Erfindung betrifft einen Apparat zur Nachahmung der
Kieferbewegungen in der Form eines Artikulators, bei dem
zur Aufnahme der Kiefermodelle ein um eine Querachse verschwenkbarer oberer Bügel oder Träger und ein gegenüber
dem oberen Bügel oder Träger schwenksicher gehaltener
unterer Bügel oder Träger vorgesehen sind, und bei dem
die Ebenen der Bügel bzw. Träger in der Schließstellung
der Modelle etwa parallel im Abstand zueinander verlaufen
und die Schließbewegung durch einen verstellbaren Anschlag
für den oberen Bügel oder Träger begrenzt ist und
zwischen der Querachse und dem unteren Bügel oder Träger
gegenüber den Bügel- bzw. Trägerebenen geneigt verlaufende
Streben vorgesehen sind.

Bei Apparaten zur Nachahmung der Kieferbewegungen unterscheidet man zwischen Okludatoren und Artikulatoren.
Während Okludatoren lediglich Öffnungs- und Schließbewegungen der Modelle zulassen, erlauben Artikulatoren neben
der genannten Öffnungs- und Schließbewegung der Modelle
auch eine Vor- und Rück- sowie eine seitliche Verschiebebewegung der Modelle, um die Bewegung des Unterkiefers in bezug auf den Oberkiefer nachzuahmen.

Es sind verschiedene z.T. sehr kompliziert aufgebaute Artikulatoren der einleitend genannten Art bekanntgeworden.

Bei diesen Artikulatoren sind obere und untere Bügel vorgesehen, die entweder durch die Form der Bügel selbst oder aber durch entsprechende Verbindungsstreben so ausgebildet bzw. angeordnet sind, daß der Verlauf des unteren Bügels ggf. mit den zugehörigen Streben etwa dem Verlauf des Unterkieferknochens mit seinem aufsteigenden Ast entspricht. Statt der Bügel können auch andere Modellträger wie plattenförmige oder aus Stäben gebildete Elemente vorgesehen sein, die vor- und nachstehend allgemein als Träger bezeichnet sind.

Mit den bekannten Artikulatoren können die Bewegungen der Modelle, d.h. die Relativbewegung des einen Modells gegenüber dem anderen Modell, nicht in der Weise nachvollzogen werden, daß man die gleichzeitige Änderung der Stellungen beider Kiefergelenke während der verschiedenen Bewegungsabläufe hinreichend berücksichtigt.

Die Erfindung geht von der Erkenntnis aus, daß die Achse des Unterkiefers, d.h. die gedachte Achse zwischen den Unterkiefergelenkköpfen, sich in Schlingerbewegungen entsprechend der Bewegungsfreiheit der Unterkiefergelenksköpfe innerhalb der Kiefergelenkskapseln bewegt. Sobald die Kiefergelenksköpfe nicht der Schlußbißstellung entsprechend in den Kiefergelenkgruben lagern, ist auch eine Verschiebung der Kiefergelenkachse in der Längsrichtung nach links und rechts möglich.

Die vorgenannte Bewegungsfreiheit wird einerseits begrenzt durch die Kondylenbahnen der Kiefergelenksköpfe innerhalb der Gelenkkapseln der Kiefergelenke, andererseits beim Zubeißen durch die gnathologische Aufbißfläche der Zähne, die so gestaltet ist, daß die Bewegungen der Unterkiefergelenksköpfe entsprechend der Kondylenbahnen nicht behindert werden. Erst wenn die Zähne des Ober- und Unterkiefers sich berühren, beginnt eine Zwangsbewegung durch die gnathologische Aufbißfläche.

Die falsche Stellung eines einzelnen Zahnes oder die falsche Form eines Zahnhöckers kann den Bewegungsablauf in der gnathologischen Aufbißfläche so stören, daß z.B. bei Ersatz einzelner Zähne durch Brücken oder bei Überkronung einzelner Zähne örtliche Überlastungen und bei Zahnprothesen Verschiebebewegungen oder ein Abheben des gesamten Prothesenstückes auftreten, die jeweils mit recht unangenehmen Folgen für den Patienten verbunden sind.

Beim Essen gibt es drei Funktionsabläufe, welche sich auf die Kieferbewegungen unterschiedlich auswirken, das Abbeißen, das Kauen und das Schlucken. Außerdem müssen die Parafunktionen beachtet werden.

Das Abbeißen geschieht mit den Frontzähnen und dem Muskeltonus der zugehörigen Muskelgruppe. Das Kauen erfolgt mit den Backenzähnen und dem Muskeltonus der hierzu gehörenden Muskeln. Beim Schlucken erfolgt erst eine Parafunktion, nachdem die Speisen zerkaut wurden, durch die die Zähne in die Schlußbißstellung gebracht werden, und dann erfolgt erst die eigentliche Schluckbewegung durch den Muskeltonus und die hierzu gehörenden Muskeln.

Die beiden Kiefergelenke, die gnathologische Aufbißfläche und die Muskeln mit dem individuellen Muskeltonus sind ein Ganzes und als Einheit zu verstehen.

Aufgabe vorliegender Erfindung ist es, einen Apparat bzw. einen Artikulator mit den einleitend beschriebenen Merkmalen so auszubilden, daß jeder Bewegungsablauf des Unterkiefers entsprechend der gnathologischen Aufbißfläche der Zahnstellung des Gebisses unter individueller Anpassung an die unterschiedlichen anatomischen Gegebenheiten des einzelnen Patienten nachvollzogen bzw. ggf. eine künstliche gnathologische Aufbißfläche geschaffen werden kann.

Zur Lösung vorstehender Aufgabe kennzeichnet sich der einleitend genannte Artikulator erfindungsgemäß dadurch, daß in der Ebene des unteren Bügels oder Trägers eine zweite Querachse vorgesehen ist und die Streben längeneinstellbar sind und in der Gebrauchsstellung des Apparates von der unteren Querachse nach vorn in Richtung zum oberen Modell hin in einem einstellbaren Winkel zur Ebene des unteren Bügels oder Trägers geneigt verlaufen und an den Querachsen lösbar befestigt sowie um diese verschwenk- und feststellbar gehalten sind, und daß die obere Querachse über die Streb-en mit der unteren Querachse so verbunden ist, daß sie zusammen mit dem oberen Bügel oder Träger etwa in der Ebene des oberen Bügels oder Trägers mindestens über einen Winkelbereich entsprechend den Seitbißstellungen des Oberkiefermodelles verschwenkt werden kann.

Bei der vorgenannten Ausbildung des Artikulators können die von der unteren Querachse nach vorn in Richtung zum oberen Modell aufsteigenden Streben in bezug auf den unteren Bügel entsprechend den Kondylenbahnwinkeln des jeweiligen Patienten eingestellt werden. Die beschriebene Richtung der Streben und ihre Winkeleinstellung in bezug auf den unteren Bügel oder Träger trägt dem Umstand Rechnung, daß bei dem Artikulator eine ortsfeste Halterung des unteren Modells erfolgt und das obere Modell bewegt wird, während beim Patienten umgekehrt der Unterkiefer in bezug auf den Oberkiefer die entsprechenden Bewegungen
ausführt.

Durch die beschriebene Verbindung der Bügel oder Träger
über die einzeln in Länge und Richtung einstellbaren
Streben und dadurch, daß der obere Bügel oder Träger in
bezug auf den unteren Bügel bewegt werden kann, ist eine
Nachbildung der Kieferbewegung in die jeweilige Seitbißstellung und auch darüber hinaus möglich, wobei auch die
Bewegung der beiden Kiefergelenke berücksichtigt wird.

Die spezielle Ausbildung des Artikulators, insbesondere
hinsichtlich der Streben und ihrer Halterung an den Querachsen, kann je nach Verwendungszweck des Artikulators
unterschiedlich gestaltet sein.

Die Verwendung eines Artikulators für die Einarbeitung
einzelner Zähne oder Zahnersatzteile in vorhandene Prothesen oder die Einpassung von Ersatzteilen in ein Restgebiß
ermöglicht eine vereinfachte Ausbildung, da die gnathologische Aufbißfläche durch die Prothese oder durch das
natürliche Gebiß bestimmt ist und lediglich eine Anpassung
des Teilersatzes vorgenommen werden muß. Zu diesem Zweck
eignet sich eine Ausführung des Artikulators, welche sich
dadurch kennzeichnet, daß die Streben wenigstens über einen
Teil ihrer Länge als elastisch biegsame Streben ausgebildet sind.

Die elastisch biegsamen Streben bieten auch bei fixierter
Verbindung mit den Querachsen eine hinreichende seitliche
Verschiebemöglichkeit des oberen Modells, um die Seitbißstellungen nachvollziehen zu können und die hierzu notwendige Artikulation der Ersatzteile vorzunehmen, damit
diese den Bewegungsablauf in der gnathologischen Aufbißfläche nicht stören. Die Verwendung von elastisch biegsamen
Streben führt zu einer besonders einfachen konstruktiven Gestaltung des Artikulators, welcher somit sehr preisgünstig herstellbar ist.

Statt der elastisch biegsamen Streben können auch gemäß einer anderen Ausführungsform der Erfindung die Streben als biegesteife Streben ausgebildet sein und über gummielastische Gelenkelemente mit den Querachsen verbunden werden. Durch die gummielastischen Gelenkelemente wird ebenfalls eine seitliche Verschiebemöglichkeit des oberen Modells mindestens bis in die Seitbißstellungen und darüber hinaus ermöglicht .

Wenn die elastisch biegsamen Streben oder gummielastischen Gelenkelemente nicht ausreichen, um den gnathologischen Bewegungsablauf entsprechend der individuellen gnathologischen Aufbißfläche der Kiefermodelle nachzuvollziehen, so kann erfindungsgemäß vorgesehen sein, daß die Streben aus teleskopartig zusammenwirkenden biegesteifen Abschnitten bestehen und über fixierbare Kugelgelenke an den Querachsen angreifen, und daß die Abschnitte der Streben in Längsrichtung so gegeneinander gefedert gehalten sind, daß sie bei jeder einstellbaren Gesamtlänge der Streben gegen die Wirkung der Federn in beiden Richtungen verschoben werden können.

Bei dieser Ausbildung des Artikulators ergibt sich nach vorheriger, den anatomischen Verhältnissen des Patienten entsprechender Einstellung der Streben die Möglichkeit, durch Lösen der jeweilig diagonal gegenüberliegenden Kugelgelenke auch solche Verschiebebewegungen des oberen Modells vorzunehmen, die völlig außerhalb der Norm liegen und beispielsweise bei Patienten mit einer anatomisch anomalen Kiefergestaltung oder Kiefergelenkausbildung bzw. bei Patienten auftreten, deren Bewegungsfähigkeit des Unterkiefers durch einen Unfall beeinträchtigt ist.

Der Artikulator mit den biegesteifen, jedoch in Längsrichtung gegeneinander gefederten Abschnitten der starren Streben führt zu einer größeren Bewegungsfreiheit des oberen Modelles, so daß dieses jeder vorgegebenen, auch anomalen gnathologischen Aufbißfläche im Bewegungsablauf angepaßt werden kann.

Bei der Erstellung von Vollprothesen ist eine Orientierung für die Kieferbewegungen an einer vorgegebenen gnathologischen Aufbißfläche nicht mehr möglich, so daß sich hier die Notwendigkeit ergibt, eine neue künstliche gnathologische Aufbißfläche zu erstellen. An diese Aufbißfläche sind gegenüber der natürlichen gnathologischen Aufbißfläche andere Forderungen zu stellen, weil in jeder möglichen Bißstellung die Zähne des Ober- und Unterkiefers sämtlich in Kontakt bleiben müssen, um ein Abkippen oder Verschieben der Prothesen bei den verschiedenen Kieferbewegungen, insbesondere beim Kauen und den Parafunktionen zu verhindern. Durch das Fehlen der gnathologischen Aufbißfläche gibt es keine Begrenzung der Bewegung entsprechend der sonst vorhandenen gnathologischen Aufbißfläche. Aus diesem Grunde ist es notwendig, den Artikulator so zu gestalten, daß er eine Zwangsbewegung vorschreibt, die unter Berücksichtigung bestimmter Meßwerte am Kiefer des Patienten, wie Kondylenbahnwinkel sowie Abstand vom Kiefergelenkskopf bis zu den Frontzähnen und Bißhöhe, die Erstellung einer neuen künstlichen gnathologischen Aufbißfläche gestattet.

Zur Lösung dieser Aufgabe ist eine weitere Ausbildung des Artikulators erfindungsgemäß dadurch gekennzeichnet, daß die Streben zur Längeneinstellbarkeit aus teleskopartig zusammenwirkenden biegesteifen Abschnitten bestehen und über fixierbare Kugelgelenke an den Querachsen angreifen, und daß die Abschnitte der Streben bei jeder einstellbaren Gesamtlänge der Streben gegen Längsverschiebungen feststellbar sind. Auch bei dieser Ausbildung des Artikulators können die seitlichen Verschiebebewegungen des oberen Modelles durch Lockerung der jeweils diagonal gegenüberliegenden Kugelgelenke vorgenommen werden, jedoch bleibt trotz der gelockerten Gelenke eine Zwangsführung des Obermodelles bei seitlichen Bewegungen gewährleistet. Bei einem totalen Zahnersatz müssen die neuen gnathologischen Aufbißflächen in Abhängigkeit von der Zwangsbewegung des Obermodelles so gestaltet werden, daß die Front- und Backenzähne entsprechend dem vorgegebenen Bewegungsablauf in allen möglichen Stellungen einschl. der Kopfbißstellung in Kontakt bleiben. Die Aufstellung und Einartikulierung der einzelnen Zähne bei einer Vollprothese bereitet verständlicherweise sehr viel Mühe und erfordert einen großen Zeitaufwand sowie auch große Sorgfalt, um bei allen möglichen Stellungen des durch den Artikulator vorgegebenen Bewegungsablaufes die Zähne stets in Kontakt zu halten.

Aus dem vorgenannten Grunde ist es erstrebenswert, für Vollprothesen im Block zusammengefaßte Zähne zu erstellen bzw. zu verwenden, die eine gnathologische Aufbißfläche ihrerseits vorgeben und dabei die obengenannten Bedingungen erfüllen, nämlich in allen Stellungen der Kiefer zueinander den Kontakt zwischen den Zähnen aufrechtzuerhalten und die Bewegungsfreiheit der Unterkiefergelenksköpfe innerhalb der Kiefergelenke nicht zu behindern.

Der letztbeschriebene Artikulator ist auch zur Herstellung derartiger jeweils in Blöcken zusammengefaßter Zähne des Ober- und Unterkiefers mit obengenannter gnathologischer Aufbißfläche verwendbar. Durch die Verwendung von derartigen einander angepaßten Zahnblöcken entfällt die zeitraubende Einzelaufstellung der Zähne bei Vollprothesen, und es können bei Verwendung vorgefertigter Zahnblöcke auch für den totalen Zahnersatz Artikulatoren einfacherer Ausführung der obengenannten Art mit elastisch biegsamen Streben verwendet werden.

Bei Verwendung von in Blöcken zusammengefaßten Zähnen für Vollprothesen können die unteren Zähne bereits auf eine Bißschablone aufgesetzt werden, während die obere Prothese mit einem Wachswall versehen wird. Die Bißnahme beim Patienten ist gleichzeitig die erste Einprobe der unteren Prothese. Nach der Biß- und Zweitabdrucknahme (Funktionsabdruck) vom Ober- und Unterkiefer werden nach Fertigstellung der Modelle diese in dem Artikulator einartikuliert. Die oberen Zähne werden im Block auf die obere Basisplatte nach der bereits feststehenden Stellung der unteren Zähne festgewachst. Nach der anschließenden Einprobe beim Patienten können individuelle Stellungskorrekturen hauptsächlich bei den Frontzähnen unter Berücksichtigung der gnathologischen Aufbißfläche im Artikulator vorgenommen werden.

Für die vorgenannten Arbeiten können die einleitend näher genannten Artikulatoren mit elastisch biegsamen Streben in der üblichen Weise verwendet werden, da die gnathologische Aufbißfläche durch die im Block vorhandenen Zähne vorgegeben ist.

Der Artikulator mit den biegesteifen und in ihrer Länge feststellbaren Streben ist auch in der Kieferorthopädie verwendbar, wenn Regulierungsprothesen hergestellt werden sollen, die eine neue künstliche gnathologische Aufbißfläche, beispielsweise zur Erzielung von myofunktionellen Therapieimpulsen, benötigen.

Weitere konstruktiv vorteilhafte Ausgestaltungen der Artikulatoren unabhängig von den oben beschriebenen Ausführungsformen ergeben sich aus den Merkmalen der Unteransprüche 6 bis 10.

Die Zeichnung gibt Ausführungsb-eispiele der Erfindung in schematischer Darstellung wieder.

Es zeigen:

Fig. 1    eine erste Ausführungsform des Artikulators mit Bügeln in perspektivischer Darstellung ohne die an den Bügeln zu befestigenden Kiefermodelle,

Fig. 1a   die in Fig. 1 mit A bezeichnete Einzelheit in anderer Ausbildungsform,

Fig. 2    in gleicher Darstellung wie Fig. 1 eine andere Ausführung des Artikulators mit an den Bügeln gehaltenen Kiefermodellen in der Schlußbißstellung,

Fig. 2a   einen Längsschnitt durch ein Kugelgelenk des Artikulators nach Fig. 2 entlang der Schnittlinie III-III,

Fig. 3    einen Längsschnitt durch eine Strebe des Artikulators nach Fig. 2,

Fig. 4    einen Längsschnitt durch eine geänderte Ausführung der Strebe in gleicher Darstellung wie Fig. 3.

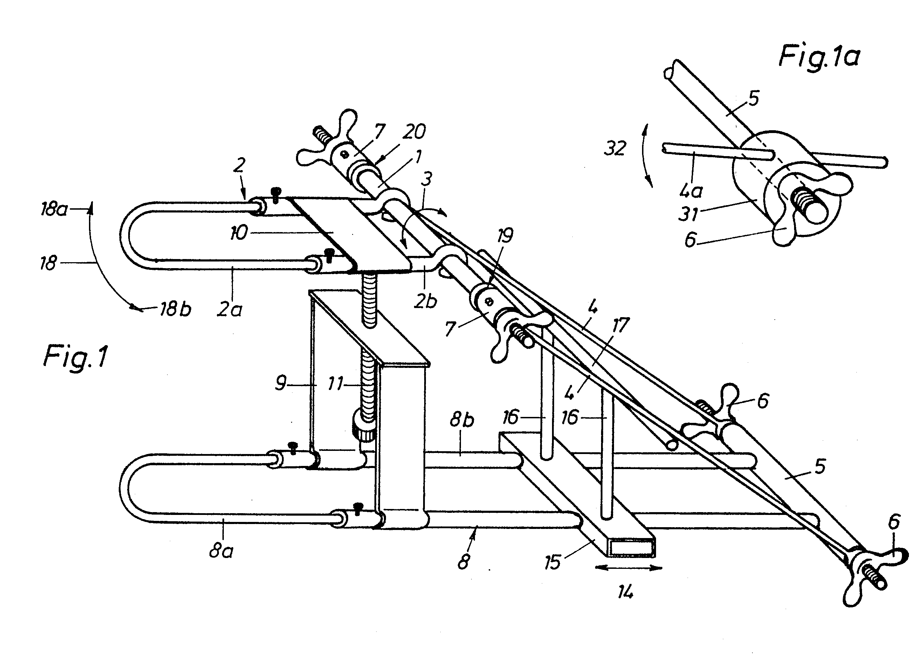

Aus den schematischen Darstellungen der Figuren ist ersichtlich, daß die in den Fig. 1 und 2 wiedergegebenen Artikulatoren jeweils einen um eine obere Schwenkachse 1 in Richtung des Doppelpfeiles 3 verschwenkbaren Bügel 2 aufweisen. An der oberen Schwenkachse 1 greifen Streben 4 an, welche parallel zueinander verlaufen und anderendig an einer zweiten unteren Schwenkachse 5 gehalten sind. Die Streben 4 sind dabei lösbar sowie um die Achsen 1 und 5 schwenkbar gehalten und können z.B. bei der Anordnung gem. Fig. 1 durch die dort dargestellten Flügelschrauben bzw. mit Flügeln ausgerüsteten Schraubhülsen 7 in jeder beliebig einstellbaren Neigungsstellung gegen Schwenkbewegungen sicher gehalten werden.

Die untere Achse 5 ist ferner mit dem unteren Bügel 8 starr verbunden, d.h. der untere Bügel 8 kann keine Schwenkbewegungen um die Achse 5 ausführen.

Die beiden Bügel 2 und 8 bestehen jeweils aus einem mit dem Kiefermodell verbindbaren Abschnitt 2a bzw. 8a und einem an den Querachsen 1 bzw. 5 angreifenden Verlängerungsabschnitt 2b bzw. 8b. Die mit dem Modell verbindbaren Abschnitte 2a und 8a sind dabei teleskopartig verschiebbar und bei jeder beliebigen Einstecktiefe feststellbar in den Verlängerungsabschnitten 2b bzw. 8b gehalten.

In beiden Ausführungsbeispielen ist zwischen dem oberen Bügel 2 und dem unteren Bügel 8 ein die Abwärtsschwenkbewegung des oberen Bügels 2 in Richtung auf den Bügel 8 begrenzender einstellbarer Anschlag vorgesehen. Dieser besteht in den Ausführungsbeispielen aus einem an dem unteren Bügel 8 nach oben ragenden brückenförmigen Teil 9 und einer an dem oberen Bügel 2 befestigten Anschlagplatte 10 sowie einer in dem brückenförmigen Teil 9 gehaltenen Stellschraube 11.

In dem Ausführungsbeispiel der Fig. 2 ist an dem oberen Bügel 2 das obere Kiefermodell 12 und an dem unteren Bügel 8 das zugehörige untere Kiefermodell 13 befestigt. Die Kiefermodelle 12 und 13 geben in Fig. 2 die Schlußbißstellung wieder.

Man erkennt, daß in beiden Ausführungsbeispielen die Streben 4 von der unteren Querachse 5 nach vorn in Richtung zum oberen Kiefermodell 12 bzw. zu dem dieses Modell tragenden Bügel 2 geneigt bzw. ansteigend verlaufen. Dabei entspricht der Winkel zwischen dem unteren Bügel 8 und den Streben 4 dem jeweiligen Kondylenbahnwinkel des Patienten, dessen Kieferbewegungen in dem dargestellten Artikulator nachvollzogen werden sollen.

In dem Ausführungsbeispiel der Fig. 1 sind auf dem unteren Bügel 8 verstellbare Anschläge in Form einer Anschlagbrücke zur Abstützung der Streben 4 in einer der Schlußbißstellung der Kiefermodelle entsprechenden Neigungsstellung vorgesehen. Diese Anschläge bestehen in diesem Beispiel der Fig. 1 aus einer auf dem Bügel 8 in Richtung des Doppelpfeiles 14 verschiebbaren und in jeder Stellung feststellbaren Stützplatte 15, welche starr mit ihr verbundere Stützen 16 und einen an diesen befestigten Anschlagstab 17 trägt, auf welchem sich die Streben 4 abstützen.

Durch Lösen der Flügelschrauben 6 bzw. der mit Flügeln ausgerüsteten Schraubenhülsen 7 und durch Verschieben der Grundplatte 15 können die Streben 4 in die verschiedensten, den jeweiligen Kondylenbahnwinkeln entsprechenden Neigungsstellungen überführt und durch Festziehen der genannten Schraubenhülsen 6 bzw. 7 gegen Schwenkbewegungen um die untere Achse 5 sowie die obere Achse 1 fixiert werden, wobei sie sich gleichzeitig auf dem Anschlagstab 17 abstützen.

Im Beispiel der Fig. 1 sind die Streben 4 als elastisch biegsame Streben ausgebildet. Hierdurch ist es möglich, den oberen Bügel 2 zusammen mit der oberen Schwenkachse 1 in Richtung des Doppelpfeiles 18 in der Ebene des Bügels über einen Winkelbereich zu verschwenken, welcher zumindest der Seitbißstellung des oberen Kiefermodelles 12 entspricht.

Bei der Verschwenkung des Bügels 2 in Richtung der Pfeilspitze 18a erfolgt eine Verschwenkung der oberen Achse 1 und des Bügels 2 um die Verbindungsstelle 19 der Strebe 4 mit der oberen Achse 1. Dabei bleibt die genannte Verbindungsstelle 19 weitgehend in relativer Ruhe, während die Verbindungsstelle 20 der Strebe 4 mit der Achse 1 die Schwenkbewegung um die Verbindungsstelle 19 ausführt und dabei auch geringfügig angehoben wird. Umgekehrt erfolgt bei einer Verschwenkung des oberen Bügels 2 in Richtung der Pfeilspitze 18b eine Verschwenkung des Anlenkpunktes 19 der Strebe 4 an der oberen Achse 1 um die Anlenkstelle 20 der zugehörigen Strebe 4 an der oberen Achse 1. Die jeweils an der nicht verschwenkenden Verbindungsstelle angreifende Strebe 4 bleibt während der Verschwenkbewegung des Bügels auf dem Stützstab 17 abgestützt, während die andere Strebe 4 von dem Stützstab 17 ein wenig abheben kann.

Der Artikulator nach Fig. 1 ist gemäß den Ausführungen in der Beschreibungseinleitung besonders geeignet und vorgesehen zur Einartikulierung des Gebisses, wenn die gnathologische Aufbißfläche durch das Vorhandensein eines Restgebisses des Patienten noch vorgegeben ist.

Dabei wird die beschriebene Bewegung der Verbindungsstellen 19 und 20 durch die vorgegebene gnathologische Aufbißfläche bestimmt und entspricht der jeweiligen Bewegung der Kiefergelenke. Es können mit dem Artikulator nach Fig. 1 die verschiedenen Bißstellungen unter Berücksichtigung der unterschiedlichen Bewegungen der Kiefergelenke nachvollzogen werden, ebenso wie es möglich ist, die Öffnungs- und Schließstellung durch entsprechende Verschwenkung des Bügels 2 in Richtung des Doppelpfeiles 3 nachzuvollziehen.

Statt der in Fig. 1 wiedergegebenen elastisch biegsamen Streben 4 können bei sonst gleicher Anordnung auch gem.der Fig. 1a biegesteife Streben 4a in Verbindung mit gummielastischen Gelenkelementen 31 verwendet werden, die im Beispiel der Fig. 1a als zylindrische Gummielemente ausgebildet sein können, welche mittels der Flügelschrauben 6 drehsicher auf der Achse 5 befestigbar sind und in einer entsprechenden Bohrung die biegesteifen Streben 4a so aufnehmen, daß diese im Reibschluß in den Elementen 31 gehalten sind und unter Überwindung des Reibschlusses längsverschoben werden können. Der Werkstoff der gummielastischen Gelenkelemente 31 ist dabei so gewählt, daß die Streben 4a bei entsprechender Krafteinwikung auf den oberen Bügel 2 Schwenkbewegungen in Richtung des Doppelpfeiles 18 gegen die Federkraft der gummielastischen Gelenkelemente 31 ausführen können.

Bei der Ausführung des Artikulators nach Fig. 2 sind die Streben 4 mit der oberen Achse 1 und der unteren Achse 5 jeweils über fixierbare Kugelgelenke 21 verbunden.

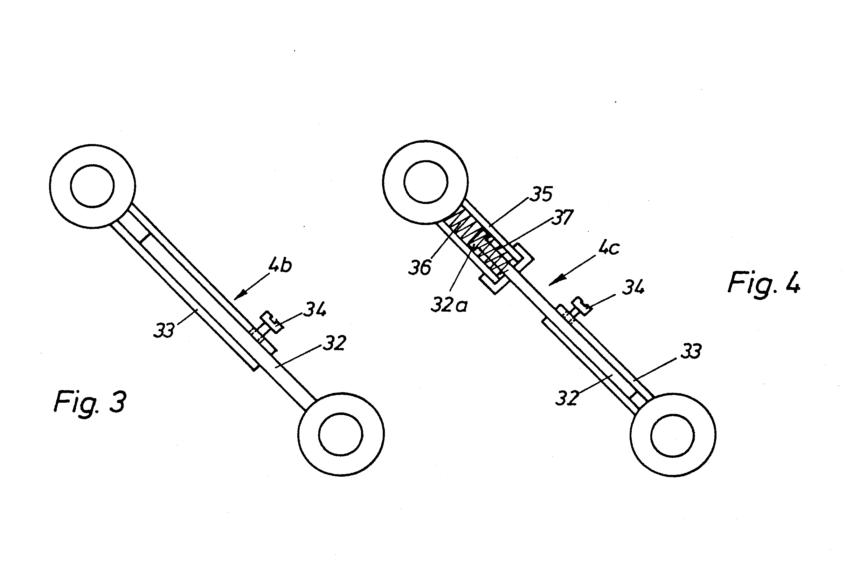

Ein Ausführungsbeispiel derartiger Kugelgelenke ist in der Schnittdarstellung der Fig. 3 wiedergegeben.

Die Enden der Achsen 1 und 5 sind zur Aufnahme von Schraub- bzw. Rändelmuttern 22 mit Gewinde versehen und erstrecken sich durch ein inneres Kugelelement 23, welches seinerseits in einer zentrischen Bohrung 24 eines äußeren Kugelelementes 25 gehalten ist. Das äußere Kugelelement 25 ist fest mit der Strebe 4 verbunden. Auf den Achsen 1 bzw. 5 sind ferner feste Widerlager 26 vorgesehen sowie beiderseits des äußeren Kugelelementes 25 kalottenartige Widerlager 28, die frei verschiebbar auf der Achse 1 gehalten sind.

Bei angezogener Rändelmutter 22 erfolgt über die kalottenartigen Widerlager 28 und das feste Widerlager 26 eine Fixierung des äußeren mit der Strebe 4 verbundenen Kugelelementes 25, während bei gelockerter Schraube 22 das Kugelelement 25 freibeweglich auf dem inneren Kugelelement 23 verschwenkbar ist.

Wenn alle Rändelmuttern 22 der Kugelgelenke 21 gelockert sind, kann der Neigungswinkel der Streben in bezug auf den unteren Bügel 8 in jeder erforderlichen Größe, also entsprechend dem jeweiligen Kondylenbahnwinkel des Patienten, eingestellt werden. Dabei ist ähnlich wie in Fig. 1 ein verstellbarer Anschlag zur Abstützung der Streben 4 in einer der Schlußbißstellung der Kiefermodelle 12,13 entsprechenden Neigungsstellung vorgesehen. Der verstellbare Anschlag ist bei dem Beispiel der Fig. 2 in Form eines Anschlaggestänges 29 ausgebildet. Auf dem Bügelabschnitt 8b sind reibschlüssig und bei Überwindung der Reibkräfte in Richtung des Doppelpfeiles verschiebbare Hülsen 29a vorgesehen, von denen lotrecht und teleskopartig ausgebildete Stützstangen 29b aufragen, die in Richtung des Doppelpfeiles 14a unabhängig voneinander längeneinstellbar sind. Die Stützstangen 29b sind an ihren oberen Enden mit Hülsen 29c verbunden, die ihrerseits wiederum im Reibschluß auf einem Stützstab 29d gehalten sind, der als Anschlagstab für die Streben 4 dient. An den beiden Enden des Stützstabes 29d sind wiederum im Reibschluß gehaltene Anschlagböckchen 29e vorgesehen, welche zur seitlichen Fixierung der Streben 4 an diesen anliegen. An der unteren Querachse 5 ist eine Feder 30 befestigt, welche die Streben 4 in die der Schlußbißstellung der Modelle 12,13 entsprechende einstellbare Neigungsstellung drücken.

Das Anschlaggestänge 29 ermöglicht eine unterschiedliche Einstellung der Streben 4 in Bezug auf ihre Neigungsstellung, so daß der Artikulator auch zum Nachvollziehen des Bewegungsablaufes von Kiefergelenken mit anatomischen Anomalien geeignet ist, wie sie beispielsweise durch einen Unfall oder aufgrund anderer Gegebenheiten, wie Krankheiten oder dgl., auftreten können.

Im Falle des Ausführungsbeispieles der Fig. 2 kann eine seitliche Verschiebung des oberen Modelles 12 in Richtung des Doppelpfeiles 18 dadurch vorgenommen werden, daß die jeweils diagonal gegenüberliegenden Rändelmuttern 22 der Kugelgelenke 21 gelöst werden. Bei einer Verschiebebewegung in Richtung der Pfeilspitze 18a ist eine Lösung des Kugelgelenkes an der Anlenkstelle 30 und an der Anlenkstelle 31 erforderlich. Umgekehrt müssen bei einer Verschiebebewegung des Obermodelles 12 in Richtung der Pfeilspitze 18b die genannten Anlenkstellen 30 und 31 fixiert und die beiden anderen Anlenkstellen gelockert werden.

Bei einer Verschiebebewegung des oberen Kiefermodelles 12 in Richtung zur Pfeilspitze 18a erfolgt gleichzeitig eine geringfügige Aufrichtung der mit der gelösten Anlenkstelle 31 verbundenen Strebe 4, während die andere Strebe 4 ihre Neigungsstellung beibehält.

Der in Fig. 2 wiedergegebene Artikulator kann mit unterschiedlichen Streben 4 ausgerüstet werden, um verschiedenen Zwecken zu dienen.

Die verschiedene Ausbildung der Streben ist in den Fig. 3 und 4 wiedergegeben. Fig. 3 zeigt dabei den Längsschnitt durch eine insgesamt mit 4b bezeichnete Strebe, wie sie der Ausbildung in der Fig. 2 entspricht. Fig. 4 zeigt den Längsschnitt durch eine Strebe 4c, die ein in ihrer Längsrichtung federndes Glied aufweist.

Die Streben 4b und 4c bestehen aus teleskopartig zusammenwirkenden biegesteifen Abschnitten 32 und 33, so daß sie längeneinstellbar sind und in der jeweils eingestellten Länge durch Feststellschrauben 34 fixiert werden können.

Bei der Ausführung nach Fig. 4 greift der Abschnitt 32 der Strebe mit einem Ansatz 32a in eine Hülse 35 ein, welche zwei Federn 36 und 37 umschließt, so daß die Gesamtlänge der Strebe nach Einstellung ihrer Ausgangslänge durch in ihrer Längsrichtung wirksame Druck- oder Zugkräfte gegen die Wirkung der Federn 36 bzw. 37 verlängert oder verkürzt werden kann.

Bei einer Ausrüstung des Artikulators nach Fig. 2 mit den in Fig. 3 wiedergegebenen Streben ergibt sich gemäß den Darlegungen in der Beschreibungseinleitung eine Ausführung, welche insbesondere für die Nachahmung von Kieferbewegungen bei der Herstellung von Vollprothesen unter Berücksichtigung der jeweiligen anatomischen Gegebenheiten des Patienten geeignet ist. Dieser Artikulator ermöglicht durch die Zwangsbewegung bei entsprechender Einstellung die Erstellung neuer künstlicher gnathologischer Aufbißflächen, die für die Funktionstüchtigkeit von Vollprothesen notwendig sind. Dabei können durch Lösen aller Rändelmuttern 22 der Kugelgelenke 21 mit dem in Fig. 2 wiedergegebenen Artikulator auch die Übergangsphasen von der Schlußbißstellung zur Kopfbißstellung nachvollzogen werden, um eine Aufstellung der Zähne so vorzunehmen, daß auch während dieser Phase eine Aufrechterhaltung der Backenzahnberührung durch entsprechende Gestaltung der gnathologischen Aufbißfläche der Zähne gewährleistet wird.

Für die Einstellung des Artikulators sowohl nach Fig. 1 als auch nach Fig. 2 sind lediglich Messungen und Übertragungen des Kondylenbahnwinkels, der Entfernung vom Kiefergelenk bis zu den Frontzähnen und bei Vollprothesen der Bißhöhe notwendig. Die Übertragung der Entfernung vom Kiefergelenk bis zu den Frontzähnen entspricht in dem Artikulator der Entfernung von der oberen Achse 1 bis zu den Frontzähnen, während die Bißhöhe durch die Kiefermodelle bzw. durch den Abstand der Bügel 2 und 8 einstellbar ist.

Der Artikulator nach Fig. 2 ist gemäß einem besonderen Merkmal der Erfindung auch zur Herstellung von jeweils in Blöcken zusammengefaßten Zähnen des Ober- und Unterkiefers mit einer künstlichen gnathologischen Aufbißfläche verwendbar. Durch die Herstellung derartiger Zahnblöcke können Vollprothesen ohne eine Einzelaufstellung der Zähne in einfacher Weise verwendet werden. Hierdurch wird nicht nur der Zeitaufwand vermindert, sondern es wird auch sichergestellt, daß die für Vollprothesen notwendige, von dem natürlichen Gebiß abweichende gnathologische Aufbißfläche bereits für die Einpassung der individuell anzupassenden Prothese vorgegeben und beibehalten wird. Dabei ist durchaus eine individuelle Anordnung und Stellung der Frontzähne möglich, um den Zahnersatz im Bereich dieser Frontzähne so zu gestalten, daß er weitestgehend dem Aussehen des früheren natürlichen Gebisses des Patienten entspricht. Es können nämlich die betreffenden Frontzähne ohne Schwierigkeiten ohne eine Beeinträchtigung der Funktion der Prothese aus dem Block herausgetrennt und durch andere Zähne ersetzt oder in ihrer Stellung verändert werden, um den Wünschen des Patienten zu entsprechen bzw. eine weitgehende Anpassung des Gebisses an sein früheres natürliches Gebiß vorzunehmen.

Wenn an Stelle der Streben 4b nach Fig. 3 Streben gemäß Fig. 4 in den Artikulator nach Fig. 2 eingebaut werden, ergibt sich ein Artikulator, welcher in seiner Funktion der Ausführung nach den Fig. 1 und 1a ähnlich ist. Nach dem Lösen der Feststellschrauben 22 der Kugelgelenke 21 können mit dem Artikulator nach Fig.2 in Verbindung mit den Streben 4c jedoch Bewegungen mit größerem Freiheitsgrad ausgeführt werden, als dies mit dem Artikulator nach den Fig. 1 und 1a möglich ist, um bei vorgegebener gnathologischer Aufbißfläche die notwendigen Kieferbewegungen auch dann vollständig nachvollziehen zu können, wenn diese infolge anomaler Ausbildung des Kiefers oder durch Unfallfolgen mit den Ausführungen des Artikulators nach den Fig. 1 und 1a nicht mehr ausgeführt werden können.

## Ansprüche

1. Apparat zur Nachahmung der Kieferbewegungen in der Form eines Artikulators, bei dem zur Aufnahme der Kiefermodelle ein um eine Querachse verschwenkbarer oberer Bügel oder Träger und ein gegenüber dem oberen Bügel oder Träger schwenksicher gehaltener unterer Bügel oder Träger vorgesehen sind, und bei dem die Ebenen der Bügel bzw. Träger in der Schließstellung der Modelle etwa parallel im Abstand zueinander verlaufen und die Schließbewegung durch einen verstellbaren Anschlag für den oberen Bügel oder Träger begrenzt ist und zwischen der Querachse und dem unteren Bügel oder Träger gegenüber den Bügel- bzw. Trägerebenen geneigt verlaufende Streben vorgesehen sind, d a d u r c h g e k e n n z e i c h n e t , daß in der Ebene des unteren Bügels (8) oder Trägers eine zweite Querachse (5) vorgesehen ist, und die Streben (4) längeneinstellbar sind und in der Gebrauchsstellung des Apparates von der unteren Querachse nach vorn in Richtung zum oberen Modell (12) hin in einem einstellbaren Winkel zur Ebene des unteren Bügels bzw. Trägers geneigt verlaufen und an den Querachsen (1,5) lösbar befestigt sowie um diese verschwenk- und feststellbar gehalten sind, und daß die obere Querachse über die Streben mit der unteren Querachse so verbunden ist, daß sie zusammen mit dem oberen Bügel bzw. Träger etwa in der Ebene des oberen Bügels oder Trägers mindestens über einen Winkelbereich entsprechend den Seitbißstellungen des Oberkiefermodelles verschwenkt werden kann.

2. Apparat nach Anspruch 1, d a d u r c h g e - k e n n z e i c h n e t , daß die Streben (4) wenigstens über einen Teil ihrer Länge als elastisch biegsame Streben ausgebildet sind.

3. Apparat nach Anspruch 1, d a d u r c h    g e -
   k e n n z e i c h n e t , daß die Streben (4) als
   biegesteife Streben ausgebildet sind und über gummielastische Gelenkelemente (31) mit den Querachsen (1,5)
   verbunden sind.

4. Apparat nach einem der Ansprüche 1 bis 3,    d a -
   d u r c h    g e k e n n z e i c h n e t , daß die
   Streben (4) aus teleskopartig zusammenwirkenden biegesteifen Abschnitten (32,33) bestehen und über fixierbare Kugelgelenke (21) an den Querachsen (1,5) angreifen,
   und daß die Abschnitte in Längsrichtung gefedert gehalten
   sind, so daß sie bei jeder einstellbaren Gesamtlänge
   der Streben gegen die Wirkung der Federn (36,37) in
   beiden Richtungen verschiebbar sind.

5. Apparat nach Anspruch 1, d a d u r c h    g e -
   k e n n z e i c h n e t , daß die Streben (4) aus
   teleskopartig zusammenwirkenden biegesteifen Abschnitten
   (32,33) bestehen und über fixierbare Kugelgelenke (21)
   an den Querachsen (1,5) angreifen, und daß die Abschnitte der Streben bei jeder einstellbaren Gesamtlänge
   der Streben gegen Längsverschiebungen feststellbar
   sind.

6. Apparat nach einem der vorhergehenden Ansprüche,
   d a d u r c h    g e k e n n z e i c h n e t , daß
   verstellbare Anschläge in Form einer Anschlagbrücke
   (15,16,17) oder in Form eines Anschlaggestänges (29,
   29a bis 29d) zur Abstützung der Streben (4) in einer
   der Schlußbißstellung der Kiefermodelle (12,13) entsprechenden Neigungsstellung bevorzugt am unteren Bügel
   (8) oder Träger vorgesehen sind.

7. Apparat nach Anspruch 6, d a d u r c h    g e -

k e n n z e i c h n e t , daß an den Streben (4) Federn (30) angreifen, welche die Streben (4) in die der Schlußbißstellung der Modelle (12,13) entsprechende Neigungsstellung drücken.

8. Apparat nach einem der vorhergehenden Ansprüche, d a d u r c h g e k e n n z e i c h n e t , daß jeder Bügel (2,8) oder Träger aus einem mit dem zugehörigen Modell verbindbaren Abschnitt (2a,8a) sowie an den Querachsen (1,5) angreifenden Verlängerungsabschnitten (2b,8b) besteht und daß die genannten Abschnitte steckbar bzw. teleskopartig miteinander verbunden sind.

9. Apparat nach einem der vorhergehenden Ansprüche, d a d u r c h g e k e n n z e i c h n e t , daß zwischen dem oberen und unteren Bügel (2 bzw. 8) oder dem oberen und unteren Träger ein die Abwärtsschwenkbewegung des oberen Bügels bzw. Trägers begrenzender einstellbarer Anschlag vorgesehen ist.

10. Apparat nach Anspruch 9, d a d u r c h g e - k e n n z e i c h n e t , daß am unteren Bügel (8) bzw. Träger ein nach oben ragendes brückenförmiges Teil (9) mit einer Stellschraube (11) und am oberen Bügel (2) bzw. Träger eine Anschlagplatte (10) vorgesehen sind.

11. Verwendung des Apparates nach einem der Ansprüche 5 bis 10 zur Herstellung von jeweils im Block zusammengefaßten Zähnen des Ober- und Unterkiefers für Vollprothesen mit einer gnathologischen Aufbißfläche, bei der in jeder Bißstellung alle Zähne des Ober- und Unterkiefers in Berührung bleiben.

0088981

Fig.1a

Fig.1

0088981

Fig. 2

Fig. 2a

0088981

Fig. 4

Fig. 3